# EUROPEAN PATENT APPLICATION

(11) **EP 3 932 982 A1**
(43) Date of publication of application: **05.01.2022**
(21) Application number: 20183883.6
(22) Date of filing: 03.07.2020
(51) Int. Cl.: C08K 7/02, C08K 9/08, A61G 17/00, C08L 67/02, F23G 1/00

(54) **BIODEGRADABLE AND COMPOSTABLE COMPOSITION AND USE THEREOF**

(71) Applicant: Gaia Holding AB, 253 68 Helsingborg (SE)
(72) Inventor: Rosén, Åke, 254 54 Helsingborg (SE)
(74) Representative: AWA Sweden AB

(57) **Abstract**

The present invention concerns a biodegradable and compostable composition suitable for use as a formable material in preparing coffins or urns comprising i) 63-78.5 % by weight of at least one biodegradable and/or decayable aromatic ester; ii) 5-15 % by weight of at least one organic filler; iii) 1-5 % by weight of at least one oil of vegetable origin; iv) 5-30 % by weight of an additive chosen from hydrated magnesium silicate; v) 0.5-2 % by weight of at least one slip agent; (vi) 5-10 % by weight of at least one flame retarding agent.

## Description

### Technical field of the invention

The present invention relates to a biodegradable and compostable composition having a unique composition of different components, which is fully biodegradable and fully compostable after decomposition. The present invention further relates to a granule comprising the composition. Further, the invention relates to use of the composition or a granule comprising the composition as a formable material for preparing a coffin or urn.

### Technical Background

The environmental issue, especially connected to the emission of NOx, with combustion of coffins during cremation has lately got more and more attention. This is due to the components of the chipboards commonly used to manufacture the coffins. As a solution, coffins made of wood are available. However, those are more expensive than the chipboards. Further, a common problem for both the wood coffins and the ones made of chipboard are that they are heavy to handle, and they are hard to stack on each other, making them hard to transport and store in larger amounts due to the large space needed.

A material that lately has been seen on the market for coffins are corrugated paper. However, to be used in a safe way as a coffin the material must withstand fire for about 20 seconds before autoignition. This is because the door to the oven where the coffin is placed needs to be closed before the coffin catches fire due to safety regulations.

Further, when coffins and urns are used for burial it is of great importance that the material they are made of does not release toxic compounds into the surrounding environment.

During the last decades, different types of plastics have been used as a replacement within many fields since it is light weight, easy to mold and may be processed into several shapes, it is cheap and resistant towards stress. However, the use of plastic has during the last years met resistance since it originally was made from fossil based raw material. The conventional raw material for the commonly used plastic polyethene (PE) is petroleum or natural gas. This raw material is not renewable, it is not degradable and during combustion it releases methane gas. To overcome some of this, PE has instead been produced from sugar canes. However, even if sugar canes being a renewable raw material, it still releases methane gas during combustion and it is not degradable. Further, sugar canes are produced in Brazil, leading to long transport of the material, and during production, sugar canes demands large amount of water.

Moreover, the use of plastics in many products has led to the release of small plastic components, called micro plastics, into the ground and water. Micro plastics have been found all over the globe and it is today not known what environmental effects the large distribution can have.

Additionally, when rest products from items made of PE are to be recycled these have to go through a process of autoclaving to inactivate and/or remove bacteria and other microbes. This process is more costly than producing new PE, leading to a low degree of recycling and thus more use of the raw materials.

From the view of both governments and public there is a large demand for better materials to use in fields where plastic has been an important material. The new material used must be made to a large extent of renewable sources, be biodegradable and compostable. One such material commonly used is polylactic acid (PLA) produced from starch. However, this material comes with some drawbacks, some of them being that the temperature for decomposition is 70 ºC, but the softening temperature is 50 ºC. This gives drawbacks during decomposition, since a high temperature is needed to initiate the process, while at the same time the products softens at 50 ºC which restrains the product from being used in environments with temperatures above 50 ºC. Thus, for use as a material based on PLA in coffins is probably not suitable since it will not withstand the large temperatures of up to 540 ºC which can be found in cremation ovens.

Thus, there is a need for developing new materials for replacing wood, chipboards and corrugated paper within the coffin and urn industry.

### Summary of the invention

One object of the present invention is to provide a composition suitable for replacing e.g. wood, chipboards and corrugated paper as a material in coffins and/or urns, which composition is made from renewable resources, which is biodegradable, compostable, and which does not leave micro plastics.

A further objective of the present invention is to provide a composition which is light weight and allows for stacking of the coffins and/or urns on top of each other.

Yet another object of the present invention is to provide granules from said composition. The granule being possible to further process using standard machines and processes, such as thermo forming.

Another object of the present invention is to provide a use of the composition or granules comprising the composition as a formable material for preparing a coffin or urn.

The present invention concerns a composition suitable for use as a formable material for preparing a coffin or urn, which composition is biodegradable, compostable, and which does not leave micro plastics. According to the invention, the composition comprises: (i) 63-78.5 % by weight of at least one biodegradable and/or decayable aromatic ester; (ii) 5-15 % by weight of at least one organic filler; (iii) 1-5 % by weight of at least one oil of vegetable origin; (iv) 1-5 % by weight of an additive chosen from hydrated magnesium silicate; (v) 0.5-2 % by weight of at least one slip agent; and (vi) 0-10 % by weight of at least one flame retarding agent.

The present invention also concerns a granule comprising the composition as disclosed in this application.

The present invention further concerns use of a composition as disclosed in this application or a granule as described herein as a formable material for preparing coffins and/or urns.

Hereby an improved composition suitable for replacing e.g. wood, chipboards and corrugated paper, as well as plastic, is provided, which is feasible for use as a formable material for preparing coffins or urns, without leaving microplastics, and which is biodegradable and compostable.

By using at least one biodegradable and/or decayable aromatic ester in the present composition, an environmentally friendly coffin and/or urn manufactured from the composition or from granules comprising the composition as disclosed in this application, is provided. The coffin becomes light weight and easy to stack on each other. This improves the possibility of storage as well as the working environment of the persons working with funerals.

By using hydrated magnesium silicate in a mix with oil of vegetable origin, there is provided a lubricant function leading to decrease of the tear of the machines used. Further, by using hydrated magnesium silicate the color of the final coffins or urns is a soft white color appreciated by many customers. Moreover, by having an organic filler as a component in the composition, the proportion of fully renewable and of natural origin increases. Further, the use of at least one oil of vegetable origin will act as a coupling agent in the composition preventing from other liquids such as water to permeate the composition, making the composition rigid.

Further, the at least one oil of vegetable origin is used to improve the manufacture of the composition into for instance granules. The at least one oil of vegetable origin may be used to pre-treat the at least one organic filler such as starch. The at least one organic filler will absorb the at least one oil of vegetable origin such that no water can compromise the composition. Moreover, the at least one oil of vegetable origin together with the hydrated magnesium silicate will decrease the tear of the machines used.

The at least one slip agent as used in the composition will act to decrease friction between the mold and the composition during thermo forming of for instance a coffin and/or an urn. The at least one slip agent as used in the composition will act to ensure that the coffin and/or urn releases smoothly from the mold in which the composition or the granules comprising the composition is thermo formed by. Thus, it will not be absorbed into the composition.

The at least one flame retarding agent ensures that a coffin formed from the composition or from granules comprising the composition, according to the present invention, do not self-ignite before the door to the oven where the cremation is performed is closed. The coffin should not self-ignite while being inserted into the oven, but only once in place in the oven and the doors to the ovens are closed.

In one embodiment said composition comprises (i) 70 % by weight of at least one biodegradable and/or decayable aromatic ester; (ii) 12 % by weight of at least one organic filler; (iii) 3 % by weight of at least one oil of vegetable origin; (iv) 4 % by weight of an additive chosen from hydrated magnesium silicate; (v) 1 % by weight of at least one slip agent; (vi) 10 % by weight of at least one flame retarding agent. The composition being prepared as granules, suitable for further machine processing by thermo forming into a coffin.

In one embodiment of the present invention the organic filler may have a particle size of 10-50 µm, such as 10-40 µm, for example 20-30 µm.

The organic filler may be chosen from at least one of starch of vegetable origin, wood fiber, paper fiber, wood flour, modified starch or a mixture thereof. The starch of vegetable origin may be chosen from one of wheat, oat, rye or barley, or a mixture thereof or any other suitable starch source as corn, rice, potato or what is available. The paper fiber or wood fiber may be obtained from left-overs or waste in the paper industry. The use of waste or left-overs may decrease the environmental impact of the composition as well as contribute to a green circular economy. Further, the wheat, oat, rye, barley, paper fibers or wood fibers may be acquired from local producers, making the environmental impact of the transport reduced. The use of the at least one organic filler will further give the composition characteristics such that further processing of the granules made thereof will provide a materiel being non-elastic making the material suitable for rigid structures such as coffins and urns.

In one embodiment of the present invention the at least one organic filler such as starch may be pre-treated with at least one oil of vegetable origin. Said pre-treatment will saturate the particles of the at least one organic filler, ensuring that the organic filler is free from water and thereby increase the strength of the composition as well as improving the manufacturing of the granules made from the composition.

In one embodiment of the present invention, the hydrated magnesium silicate is talcum powder.

In one embodiment of the present invention, the at least one slip agent may be a fatty acid of vegetable origin or a mixture of fatty acids of vegetable origin or a vegetable oil containing fatty acids of vegetable origin. For instance, olive oil is an example of a mixture of different fatty acids which may be used as a slip agent. Olive oil is composed mainly of the mixed triglyceride esters of linoleic acid, palmitic acid and of other fatty acids.

The invention further concerns a granule comprising the composition as described herein. The granule can be further processed using standard machines for processing such as for instance thermo forming, which is used to manufacture coffins and urns. Thermo forming is a standard manufacturing process where a sheet or film of a certain material is heated to a pliable forming temperature, formed to a specific shape in a mold, and trimmed to create a usable product such as a coffin or urn. The sheet or "film" is heated in an oven to a high-enough temperature that permits it to be stretched into or onto a mold and cooled to a finished shape.

For any residues of the composition or from granules comprising the composition the decomposition of said composition or granules may be initiated at 30-35 ºC if it is present under compostable conditions with bacteria present. The decomposition may be completed within two months when nothing more than earth remains. This further decreases the environmental impact of the composition, granules and coffins or urns. Comparing the composition of the present invention to compositions including PLA, the decomposition requires 70 ºC to be initiated, which makes higher demand on the facilities handling the decomposition. Further, compared to using for instance chipboards as a construction material for coffins, they may include glue or other substances that may be toxic and may require more handling before decomposition. Even further, the composition does not release micro plastics or other toxic compounds to the environment, making it especially suitable for use as coffin or urns that are placed under ground. The coffins and/or urns as thermo-formed by using the composition or granules of the present invention may be used without the flame-retarding agent in case of a funeral without cremation. By the composition of the present invention, the carbon dioxide (CO₂) emission is reduced up to 80%. From a life cycle analysis, it has been concluded that for each 6 tons of fossil plastics which is replaced by a material of the invention 6.6 tons of carbon dioxide emission can be saved. This is in line with goals to reduce global warming.

The invention also concerns use of a composition comprising the components as described herein or the granules comprising the composition as a formable material described herein for preparation of a coffin or urn. Furthermore, in one embodiment said formable material is subjected to thermo-forming for preparing said coffins and/or urns.

### Definitions

Talc is a clay mineral composed of hydrated magnesium silicate with the chemical formula Mg₃Si₄O₁₀(OH)₂.

The term "biodegradable" means material which decomposes substantially fully, and which does not discharge contaminants during incineration or leave plastic fragments after decomposition.

The term "particle size" means, for a non-spherical particle, the diameter of a corresponding spherical particle which apart from material is identical with the non-spherical particle regarding volume, weight or area.

The terms in the claims should have their general meaning within the technical area; unless any other definition has been given above. All referral to "a" or "the" "[composition, layer, container, film]" should be read as a referral to at least one of said composition, layer, container, film, etc. unless something else is specified.

### Detailed Description of the invention

The present invention concerns a composition suitable for replacing wood, chipboards, corrugated paper, and plastics as a material for preparing a coffin or urn, which composition is made from renewable resources, which is biodegradable, compostable, and which does not leave micro plastics in the ground or water during or after use.

The biodegradable and compostable composition according to the present invention thus comprises
(i) 63-78.5 % by weight of at least one biodegradable and/or decayable aromatic ester;
(ii) 5-15 % by weight of at least one organic filler;
(iii) 1-5 % by weight of at least one oil of vegetable origin;
(iv) 1-5 % by weight of an additive chosen from hydrated magnesium silicate;
(v) 0.5-2 % by weight of at least one slip agent;
(vi) 0-10 % by weight of at least one flame retarding agent.

In one embodiment said composition comprises 70 % by weight of at least one biodegradable and/or decayable aromatic ester, 12 % by weight of at least one organic filler, 3 % by weight of at least one oil of vegetable origin, 4 % by weight of an additive chosen from hydrated magnesium silicate, 1 % by weight of at least one slip agent and 10 % by weight of at least one flame arresting agent. The composition being prepared as granules, suitable for further machine processing by thermo forming into a coffin.

In one embodiment of the present invention the biodegradable and/or decayable aromatic ester, e.g. aromatic polyester, may be a polybutylene adipate terephthalate (PBAT), a random copolymer produced from adipic acid, 1,4-butanediol, and terephthalic acid. Any other aromatic ester with similar properties as PBAT may be used. The at least one biodegradable and/or decayable aromatic ester is present in an amount of 63-78.5 % by weight. For instance, 63-68, 68-73, 73-78.5 % by weight. For example, the at least one biodegradable and/or decayable aromatic ester is present in an amount of 70 % by weight as is disclosed in the experimental part.

In one embodiment, the composition according to the invention may include at least one oil of vegetable origin. The oil may be rape seed oil. The at least one oil of vegetable origin constitute 1-5 % by weight of the composition. For example, 1-2 or 3-5 % by weight. The at least one oil of vegetable origin may for example constitute 1, 2, 3, 4 or 5 % by weight of the composition.

In one embodiment, the composition according to the invention may include an additive chosen from hydrated magnesium silicate. Talcum powder may be the preferred choice. The use of hydrated magnesium silicate provides a lubricant effect, decreasing the tear of machines. Further, the use of hydrated magnesium silicate provides the coffins or urns manufactured from the composition or from granules made from the composition with a white color which is appreciated by the customers. The hydrated magnesium silicate, such as talcum constitute 1-5 % by weight of the composition. For example, 1%, 2 %, 3 %, 4 % or 5 % by weight. In one embodiment the hydrated magnesium silicate constitutes 4 % by weight of the composition.

The composition may in one embodiment according to the invention include at least one organic filler. The at least one organic filler of the composition may be starch of a vegetable origin, wood fiber, paper fiber, wood flour, modified starch or a mixture thereof. The at least one organic filler of the composition may have a particle size of 10-50 µm, for instance around 10, 20, 30, 40 or 50 µm. The organic filler constitutes 5-15 % by weight of the composition. For example, 0-5 %, 5-10% or 10-15% by weight. The composition constitutes for example of 0, 10, 12 or 15 % by weight of at least one organic filler. The addition of at least one organic filler gives the composition characteristics such that further processing of the granules made thereof will provide a material being non-elastic making said material suitable to use as a coffin and/or urn. In one further embodiment according to the invention, the at least one organic filler being pre-treated with at least one oil of vegetable origin prevents liquids such as water to permeate the composition, increasing the firmness of the composition.

The composition may in one embodiment according to the present invention include at least one slip agent. The slip agent may be a fatty acid of vegetable origin, a mixture of fatty acids of vegetable origins or an oil containing fatty acids. In one embodiment, the slip agent may be olive oil. The use of at least one slip agent provides the outer surface of the composition or granule comprising the composition with a smooth surface leading to reduced friction, allowing the composition to be released smoothly from the mold when it is thermo formed in a next production step to a coffin or an urn. The at least one slip agent constitute 0.5-2 % by weight of the composition. For example, 0.5-1 %, 1-1.5 % or 1.5-2 % by weight of the composition. The composition constitutes for example 0.5 %, 1 % or 2 % by weight of the composition.

The composition may in one embodiment according to the present invention include at least one fire retarding agent. The fire retarding agent may be of biologic origin. The fire retarding agent may be Fyrolflex^{®} Sol-DP. FyrolFlex^{®} Sol-DP is an oligomeric phosphate ester flame retardant. The at least one retarding agent constitute 0-10 % by weight of the composition. For example, 0, 1, 2, 3, 4, 5, 6, 7, 8, 9 or 10 % by weight of the composition. The composition constitutes for example 10 by weight of the composition.

The at least one fire retarding agent of the composition may be any fire retarding agent composition with a constitution of an oligomeric phosphate ester flame retardant. The at least one fire retarding agent as used in the present composition prevents the coffin from self-igniting before the door to the oven is closed.

In a compost container, the formation of methane gas requires 30-35 ºC to start. The methane gas further increases the growth of bacteria, which starts the decaying process. For the present invention, if any residues of the composition or of granules comprising the composition ends up in a compost, this is enough for the decaying process to start, while bioplastic compositions comprising PLA according to prior art require a temperature of 70 ºC for the decomposition to start. Further, components of chipboards or wood may include toxic compounds making them unsuitable for decaying in a compost.

The problem with the use of plastic material from fossil sources which end up in nature are getting more attention from public and the governments. The use of plastics in products giving rise to micro plastics in soil and water has gained interest during later years. Microplastics may be released into the ground and water even if the product itself is not breaking down. Thus, for materials for use in coffins and/or urns which are to be buried in the ground it is of great importance that the material will not release toxic compounds to the surroundings. The composition of the present invention is fully biodegradable and compostable if placed under compostable conditions as described herein and it does not leave micro plastics. The organic filler, the oil and the slip agent according to the present invention come from vegetable origin, which is a renewable raw material, while the aromatic esters available on the market as of today mostly is from non-renewable raw material, but also from partly renewable and fully degradable sources, such as PBAT disclosed above. The composition according to the present invention may only comprise 6-30 % of non-renewable raw material.

The present invention further concerns a granule comprising the composition of the present invention as disclosed herein.

The granules of said composition may further be processed using conventional machines and processing techniques such as standard thermo forming into a coffin and/or urn.

The use of the composition or granule according to the invention as a formable material for preparing a coffin and/or urn, provides characteristics for a material which is environmentally friendly. Further, it is light weight, making it is easy to handle and which can be stacked on top of each other, for instance 10-15 coffins may be stacked on top of each other. This is very advantageous for storage of for instance coffins, as compared to coffins made from wood which are heavy and which cannot be stacked.

The use of at least one oil of vegetable origin to saturate the at least one organic filler prevents water from permeabilizing the composition which increases strength and reduces permeability.

Using an additive chosen from hydrated magnesium silicate such as talcum powder allows the mix to act as a lubricant, reducing the tear of the machines used.

### EXAMPLES

By way of examples, and not limitation, the following examples identify a variety of compositions pursuant to the embodiments of the present invention.

### Experiment 1

In the first experiment rye was mixed, in a concentration of 12 % by weight of the calculated final composition, with 3 % by weight of rapeseed oil to saturate the particles. The result was a non-sticky mixture.

In parallel, 70 % by weight of PBAT was mixed with 4 % by weight of talcum powder and 10 % by weight of Fyrolflex^{®} Sol-DP during heating to 150 ºC under a pressure of 225 bar. The mixing was done in an extruder and the lubricant mixture from the first step was added to the extruder.

Using the extruder, the composition was pushed out of the extruder and cut into granules. 1 % by weight of olive oil, acting as a slip agent, was added to the granules. The total weight of the composition was 5000 ton.

A part of the granules was further processed into a film which was heated in an oven to a high-enough temperature that permitted it to be stretched into or onto a coffin mold and cooled to a finished shape.

The coffin was easily removed from the mold in view of its beneficial composition of components.

## Claims

1. A biodegradable and compostable composition comprising:
(i) 63-78.5 % by weight of at least one biodegradable and/or decayable aromatic ester;
(ii) 5-15 % by weight of at least one organic filler;
(iii) 1-5 % by weight of at least one oil of vegetable origin;
(iv) 1-5 % by weight of an additive chosen from hydrated magnesium silicate;
(v) 0.5-2 % by weight of at least one slip agent;
(vi) 0-10 % by weight of at least one flame retarding agent.

2. A composition according to claim 1, wherein said at least one organic filler is chosen from starch of vegetable origin, wood fiber, paper fiber, wood flour, modified starch or a mixture thereof.

3. A composition according to any of claim or 1 or 2, wherein said organic filler having a particle size of 10-50 µm.

4. A composition according to any one of claims 1-3, wherein said organic filler has been pre-treated with at least one oil of vegetable origin.

5. A composition according to any one of claims 1-4, wherein said hydrated magnesium silicate is talcum powder.

6. A composition according to any one of claims 1-5, wherein said slip agent is a fatty acid of vegetable origin.

7. A granule comprising the composition as defined in any one of the claims 1-6.

8. Use of a composition according to any one of claims 1-6 or a granule as defined in claim 7 as a formable material for preparing coffins and/or urns.

9. Use according to claim 8, wherein said formable material is subjected to thermo-forming for preparing said coffins and/or urns.
